# EUROPÄISCHE PATENTSCHRIFT

(11) **EP 1 430 246 B1**
(45) Veröffentlichungstag und Bekanntmachung des Hinweises auf die Patenterteilung: **31.08.2005**
(21) Anmeldenummer: 03732321.9
(22) Anmeldetag: 07.05.2003
(51) Int. Cl.: F16L 5/06, F16L 41/14, H02G 3/06

(54) **ANSCHLUSSARMATUR**
CONNECTOR FITTING
GARNITURE DE RACCORDEMENT

(30) Priorität: 27.07.2002 DE 20211347 U
(43) Veröffentlichungstag der Anmeldung: 23.06.2004
(73) Patentinhaber: Anton Hummel Verwaltungs GmbH, 79183 Waldkirch (DE)
(72) Erfinder: BARTHOLOMÄ, Mario, 79297 Winden (DE); ZÜGEL, Fritz, 79183 Waldkirch (DE); GÖTZ, Volker, 79341 Kenzingen (DE); GERBER, Philipp, 79261 Gutach-Bleibach (DE)
(74) Vertreter: Maucher, Wolfgang
(86) Internationale Anmeldenummer: PCT/EP2003/004781
(87) Internationale Veröffentlichungsnummer: WO 2004/015320

(56) Entgegenhaltungen:
- EP-A- 0 923 177
- DE-C- 10 033 911
- US-B1- 6 179 340
- US-B1- 6 394 690

## Beschreibung

Die Erfindung betrifft eine Anschlussarmatur zum Befestigen eines länglichen Körpers, beispielsweise eines Kabels, eines Schlauches, eines Rohres, eines Wellschlauches oder dergleichen, an einer Öffnung, insbesondere an einem Durchbruch oder an einer Lochung in einer Gehäusewand, wobei die Anschlussarmatur eine in Gebrauchsstellung die Öffnung durchsetzende, mit im wesentlichen in axialer Richtung verlaufenden Schlitzen versehene Spannzange aufweist, die an einem vor der Öffnung angeordneten und verbleibenden Abschnitt ein Gewinde aufweist und sich in Einsteckrichtung hinter der Öffnung in einen die Schlitze aufweisenden Klemmbereich radial nach außen erweitert und mittels des Gewindes und einer dazu passenden Spannmutter auf der Außenseite beziehungsweise vor der Gehäuseöffnung anziehbar ist, sodass der Klemmbereich direkt oder indirekt zumindest teilweise in die Öffnung zurückziehbar und dadurch gegen den länglichen Körper verspannbar ist.

Eine derartige Anschlussarmatur ist aus DE 100 33 911 C1, Fig. 6 bis 8, bekannt und hat sich bewährt.
Dabei kann die Spannmutter unmittelbar auf einen Stutzen der Spannzange einwirken und die Spannzange einerseits anziehen, bei entgegengesetzter Drehbewegung aber auch axial wieder in Lösestellung verschieben. Somit kann der längliche Körper auch wieder freigegeben werden.

Wird diese Demontage unaufmerksam ausgeführt und die Spannmutter zu weit in Offenstellung verdreht, verlässt die Spannzange das Innengewinde der Spannmutter, sodass die gesamte Anordnung dann auseinander fällt beziehungsweise für eine spätere Montage wieder auch von der Innenseite eines Gehäuses her zusammengeführt werden muss.

Es besteht deshalb die Aufgabe, eine Anschlussarmatur der eingangs genannten Art zu schaffen, bei welcher eine ungewollte völlige Demontage von Spannzange und Spannmutter vermieden wird.

Zur Lösung dieser Aufgabe ist vorgesehen, dass die Spannmutter einen in axialer Richtung wirksamen Anschlag und die Spannzange benachbart zu ihrem Gewindeabschnitt einen Gegenanschlag aufweist und dass der Gegenanschlag den Anschlag in Lösestellung der Spannzange beaufschlagt.

Wird eine derartige Anschlussarmatur in Offen- oder Löserichtung verschraubt, kann die Spannzange das Gewinde der Spannmutter aufgrund des Anschlages und des Gegenanschlages nicht verlassen, also nicht völlig davon getrennt werden, weil vor einer derartigen Trennung Anschlag und Gegenanschlag einander berühren und eine weitere Schraubbewegung in Löserichtung verhindern.

Dabei ist es vorteilhaft, wenn die Spannzange mit dem den Gegenanschlag tragenden Bereich den Anschlag der Spannmutter in axialer Richtung auf der dem Gehäuse abgewandten Seite übergreift. Durch diese Anordnung von Anschlag und Gegenanschlag auf der dem Spannbereich der Spannzange gegenüberliegenden Seite am Gehäuse verbleibt die Anschlussarmatur beim Lösen der Spannzange in der Lochung, ohne auseinander- oder herauszufallen.

Besonders zweckmäßig ist es dabei, wenn die Spannmutter ihrem Gewinde in axialer Richtung benachbart einen hülsenartigen Fortsatz aufweist, innerhalb welchem der radial nach innen vorstehende Anschlag angeordnet ist. Dadurch bleibt der Gegenanschlag geschützt.

Der Anschlag kann dabei am Ende des Innengewindes der Spannmutter zwischen dem Gewindebereich und dem hülsenartigen Fortsatz angeordnet sein. Dadurch umschließt und schützt der hülsenartige Fortsatz das Gewinde der Spannzange auch in angezogener Gebrauchsstellung.

Dabei kann die axiale Abmessung des hülsenartigen Fortsatzes wenigstens so groß wie der axiale Verstellweg beim Spannen der Spannzange oder größer sein und der an der Spannzange befindliche Gegenanschlag kann auch bei angezogener Spannschraube oder Spannmutter innerhalb des hülsenartigen Fortsatzes angeordnet sein. So bleibt der Schutz des Gewindes der Spannschraube und des Gegenanschlages durch den hülsenartigen Fortsatz in Gebrauchsstellung auch bei größter Verstellung der Spannschraube z.B. an einem Durchbruch in einer relativ dünnen Wand erhalten.

Eine zweckmäßige Ausgestaltung der Erfindung kann darin bestehen, dass der Gegenanschlag an dem dem Spannbereich abgewandten Ende der Spannzange angeordnet und ein mit dieser verbundenes, den Anschlag der Spannmutter in Gebrauchsstellung axial übergreifendes Ringstück ist, welches über wenigstens einen Teil des Umfangs der Spannzange und des Anschlags verläuft. Durch diese große Anschlagfläche wird bei der gegenseitigen Berührung von Anschlag und Gegenanschlag eine gute Kraftverteilung erreicht.

Der als Ringstück ausgebildete Gegenanschlag kann einstückig mit der Spannzange verbunden oder ein in eine Nut am Ende der Spannzange eingesetztes separates Teil, insbesondere ein Dichtring oder O-Ring, sein. Ein einstückig gestalteter Anschlag ist stabil und benötigt bei der Spritzgussherstellung keine komplizierten Formen. Die Spannzange kann dabei von der Seite des hülsenartigen Fortsatzes her in die Spannmutter eingeschraubt werden. Dabei wird der Spannbereich der Spannzange zusammengedrückt durch den Anschlag und das anschließende Innengewinde der Spannmutter geführt und danach weiter eingeschraubt. Ist der Anschlag ein in einer Nut befindliches separates Teil, kann die Montage der Spannzange auch von der dem hülsenartigen Fortsatz abgewandten Seite erfolgen, wenn der Anschlag erst bei montierter Spannzange in die Nut eingesetzt wird. Weiterhin kann Form und Material des Anschlages je nach Einsatzfall der Anschlussarmatur variieren.

Eine ganz besonders zweckmäßige Ausgestaltung der Erfindung, die die Verdrehung der Spannmutter nicht nur durch eine axiale gegenseitige Berührung von Anschlag und Gegenanschlag verhindert, kann darin bestehen, dass der Gegenanschlag an der Spannzange wenigstens ein deren Außenumfang radial überragender, insbesondere tangential überstehender Finger ist und dass an dem davon in Gebrauchsstellung übergriffenen Anschlag der Spannmutter ein sich in axialer Richtung erstreckender Vorsprung vorgesehen ist, an welchem der Finger in Umfangsrichtung zum Sperren der Drehbewegung anschlägt.

Der als Finger ausgebildete Gegenanschlag kann federelastisch ausgebildet und beim Anschlagen an den Anschlagvorsprung elastisch bis an die Innenwand des hülsenartigen Fortsatzes auslenkbar sein, um den Übergang von Drehbewegung in Sperrstellung abzufedern.
Der etwas elastische Anschlagfinger hat weiterhin den Vorteil, dass in üblicher Weise die Spannzange mit ihrem Endbereich in die Mutter eingeführt werden kann, wobei lediglich der Anschlagfinger etwas elastisch nach innen verbogen werden muss, um durch das Gewinde und den Anschlag hindurchgeführt werden zu können. Dabei ist die Orientierung und Krümmung dieses Anschlagfingers günstig dafür, die Spannzange in die Spannmutter hineinzudrehen. Somit kann eine Spannzange mit einer sehr großen radialen Abmessung des Spannbereichs beziehungsweise der Spannfinger verwendet werden, die nicht von der anderen Seite her durch den Anschlag und das Gewinde der Überwurf- oder Spannmutter eingeführt werden könnte. Diese Anordnung erlaubt also eine Spannzange mit nahezu beliebig großer radialer Ausdehnung ihres Spannbereiches.

Der als Gegenanschlag dienende, schräg oder tangential verlaufende Finger kann entgegen der relativen Drehrichtung des Außengewindes der Spannzange von dieser abstehen. Dadurch wird erreicht, dass bei einer relativen Verschraubung in Löserichtung der zunächst von dem Anschlag an der Spannmutter noch entfernte Anschlagfinger dieser immer näher kommt und dann entgegen der Drehung der Spannmutter an den axial hochstehenden Vorsprung gelangt.

Der in axialer Richtung gegenüber dem Anschlag abstehende Vorsprung kann auf einem Durchmesser angeordnet sein, der kleiner als der Durchmesser desjenigen Kreises ist, auf welchem sich das äußere freie Ende des Anschlagfingers befindet. Durch diese Anordnung wird also der Anschlagfinger aufgeweitet und aufgespreizt und entsprechend sicher festgelegt. Gleichzeitig vergrößert sich dadurch seine radiale Überdeckung des Anschlags der Spannmutter, sodass eine Trennung der Spannzange von der Spannmutter durch eine Schraubbewegung in Löserichtung praktisch ausgeschlossen ist.

Eine besonders vorteilhafte Ausführung des axial abstehenden Vorsprunges kann sein, dass die Anschlagseite des Vorsprunges steil, insbesondere etwa axial verläuft und dass die der Anschlagseite abgewandte Begrenzung des Vorsprungs schräg ansteigend ist. Durch die steile Flanke des Vorsprunges wird der Anschlagfinger beim Lösen der Spannmutter bzw. bei der Demontage der Anschlussarmatur gehalten und die Spannmutter am Herausfallen gehindert. Wird die Anschlussarmatur montiert, kann der Anschlagfinger beim Eindrehen der Spannzange in die Spannmutter leicht über die schräge Flanke des Vorsprunges gleiten und wird bei der dadurch bewirkten Auslenkung mechanisch wenig beansprucht.

Zweckmäßig ist es außerdem, wenn an der Außenseite der Spannzange zwischen dieser und dem Lochungsrand ein mittels der Spannzange aufweitbarer, ebenfalls geschlitzter, die Lochung innenseitig mit Haltevorsprüngen hintergreifender Stutzen angeordnet ist, dessen Innenseite von der Außenseite der Spannzange beaufschlagbar ist. Die einzelnen Haltevorsprünge des Stutzens dienen dabei der sicheren Befestigung der Anschlussarmatur an der Gehäusewand, wobei sich die Haltevorsprünge an die Innenseite der Gehäusewand fest anlegen.

Neben dem Innengewinde zum Spannen der eingeschraubten Spannzange weist der untere Teil der Spannmutter ein weiteres Innengewinde mit größerem Radius als das der Spannzange auf, das zur Befestigung des Stutzens dient. Zur Anpassung an verschiedene Wanddicken wird bis zum Anliegen der Haltevorsprünge des Stutzens an der Innenseite sowie der Spannmutter an der Außenseite des Gehäuses die gesamte Spannmutter für das Verspannen gedreht. Sobald die Spannmutter fest an der Gehäusewand anliegt, wird nur noch der obere Teil der Spannmutter, also der hülsenartige Fortsatz, gedreht und damit die Spannzange mit dem länglichen Körper verspannt. Zwischen dem oberen und unteren Teil der Spannmutter kann dazu eine Rutschkupplung angebracht sein, auf der der obere Teil der Spannmutter nach dem Verspannen des unteren Teiles beim Weiterspannen der Spannzange gleitet.

Für das schnelle Verspannen der Spannzange mit dem länglichen Körper kann eine vorteilhafte Ausführung der Anschlussarmatur darin bestehen, dass mindestens einer der Klemmfinger der Spannzange einen an der Außenseite angebrachten Mitnehmersteg aufweist, der durch Verzahnung mit den Schlitzen des Stutzens beim Spannen der Spannzange ein Mitdrehen der Spannzange mit der Spannmutter verhindert. Der durch das Beaufschlagen der Innenseite des Stutzens durch die Außenseite des Spannzange vorhandene Reibschluss wird durch einen Formschluss unterstützt.

Die Öffnung des hülsenartigen Fortsatzes kann dabei vorteilhaft an der dem Gehäuse abgewandten Seite durch eine Dichtung abgeschlossen sein, die einen Durchbruch für den länglichen Körper aufweist. Dadurch kann das Innere der Anschlussarmatur gegen Feuchtigkeit und/oder Staub geschützt werden. Je nach Ausführung kann die Dichtung auch die Funktion eines Knickschutzes für den länglichen Körper erfüllen.

Nachstehend sind Ausführungsbeispiele der Erfindung anhand der Zeichnung näher beschrieben. Es zeigt in zum Teil schematisierter Darstellung:
- Fig. 1: eine Schnittdarstellung einer erfindungsgemäßen Anschlussarmatur im zusammengebauten Zustand mit einer Spannzange, deren Spannbereich in Gebrauchsstellung mit einer aufgeweiteten Außenseite eine Lochung hintergreifen kann und die am äußeren Ende als Gegenanschlag einen abstehenden Finger zum Übergreifen einer ringförmigen Stirnfläche als Anschlag und zum Zusammenwirken mit einem von dieser axial abstehenden Anschlagvorsprung aufweist,
- Fig. 2: eine Schnittdarstellung einer erfindungsgemäßen Anschlussarmatur im zusammengebauten Zustand mit Anschlagfinger und axialem Vorsprung, wobei an der Außenseite der Spannzange ein aufweitbarer Stutzen mit Haltevorsprüngen zum Hintergreifen einer Lochung angeordnet ist,
- Fig. 3: eine Explosionsdarstellung der Anschlussarmatur gemäß Fig. 2,
- Fig. 4: eine Schnittdarstellung einer erfindungsgemäßen Anschlussarmatur im zusammengebauten Zustand mit axialem Ringstück als Gegenanschlag an der Spannzange,
- Fig. 5: eine Explosionsdarstellung der Anschlussarmatur gemäß Fig. 4,
- Fig. 6: eine Schnittdarstellung einer erfindungsgemäßen Anschlussarmatur im zusammengebauten Zustand mit einem als Gegenanschlag wirkenden Dichtring in einer Nut am Ende des Gewindes der Spannzange sowie
- Fig. 7: eine Explosionsdarstellung der Anschlussarmatur gemäß Fig. 6.

Eine im Ganzen mit 1 bezeichnete Anschlussarmatur zum Befestigen eines länglichen Körpers, beispielsweise eines Kabels, eines Schlauches, eines Rohres, eines Wellschlauches oder dergleichen, an einer Öffnung, insbesondere an einem Durchbruch oder an einer Lochung in einer Gehäusewand weist eine Spannzange 2 auf, die an einem vor der Öffnung angeordneten und verbleibenden Abschnitt ein Gewinde aufweist und sich in Einsteckrichtung hinter der Öffnung in einen mit in axialer Richtung verlaufende Schlitze aufweisenden Klemmbereich radial nach außen erweitert.
Die Spannzange 2 ist mittels des Gewindes und einer dazu passenden Spannmutter 3 vor der Gehäuseöffnung anziehbar, sodass der Klemmbereich in die Öffnung zurückziehbar und dadurch gegen den länglichen Körper verspannbar ist, wobei das Außengewinde der Spannzange 2 in ein Innengewinde der Spannmutter 3 eingreift.

Zur Vermeidung einer ungewollten völligen Demontage von Spannzange 2 und Spannmutter 3 weist die Spannmutter 3 einen in axialer Richtung wirksamen Anschlag 4a, 4b und die Spannzange 2 benachbart zu ihrem Gewindeabschnitt einen Gegenanschlag 5a, 5b, 5c, 5d auf, wobei der Gegenanschlag 5a, 5b, 5c, 5d den Anschlag 4a, 4b in Lösestellung der Spannzange 2 beaufschlagt und dadurch verhindert, dass die Spannzange 2 das Gewinde der Spannmutter 3 verlassen kann bzw. von der Spannmutter 3 getrennt werden kann.

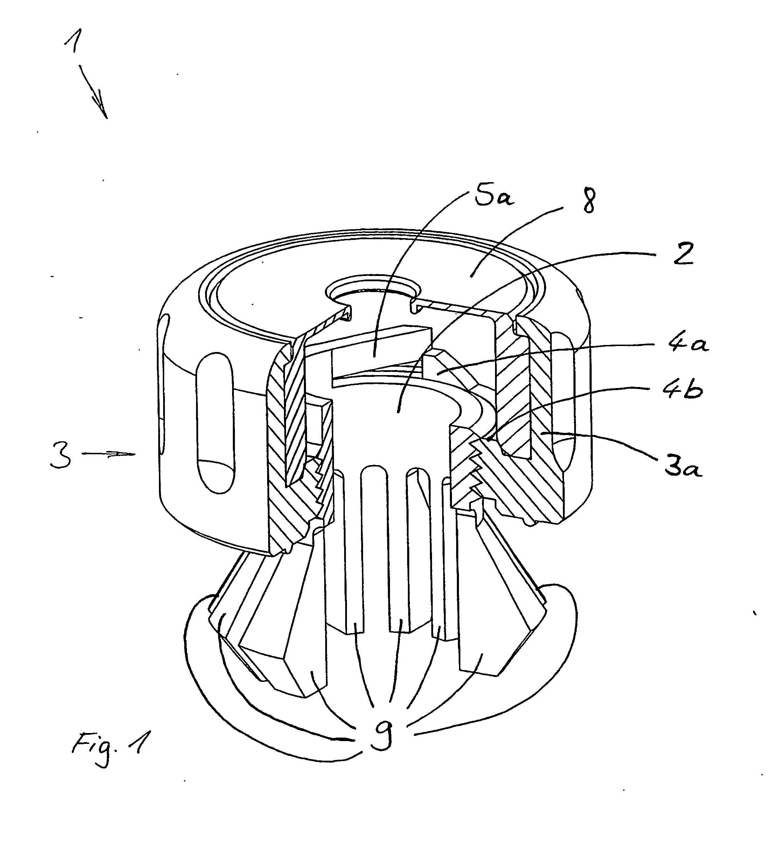

In der in Fig. 1 erkennbaren Ausführungsform weist die erfindungsgemäße Anschlussarmatur an dem dem Spannbereich der Spannzange 2 abgewandten Ende des Innengewindes 4b der Spannmutter 3, welches eine ringförmige Stirnfläche bildet, einen als Anschlag dienenden axialen Vorsprung 4a auf, der in diesem Ausführungsbeispiel eine steil ansteigende, axial verlaufende Anschlagseite aufweist. Die der Anschlagseite abgewandte Seite des Vorsprunges 4a ist schräg ansteigend.

Die Spannmutter 3 weist an dem Ende ihres Innengewindes in axialer Richtung benachbart einen hülsenartigen Fortsatz 3a auf, innerhalb welchem der Vorsprung 4a angeordnet ist und der in axialer Richtung so groß wie der axiale Verstellweg beim Spannen der Spannzange 2 oder größer ist, sodass ein an der Spannzange 2 befindliche Gegenanschlag 5a auch bei angezogener Spannschraube 2 oder Spannmutter 3 innerhalb des hülsenartigen Fortsatzes 3a angeordnet ist.

Am oberen Ende der Spannzange 2 ist ein als Gegenanschlag dienender tangential überstehender Finger 5a angeordnet, der entgegen der relativen Drehrichtung des Außengewindes der Spannzange 2 von dieser absteht und der in Lösestellung der Spannzange 2 den Vorsprung 4a sowie die das Ende des Innengewindes 4b bildende ringförmige Stirnfläche der Spannmutter 3 in axialer Richtung auf der dem Gehäuse abgewandten Seite beaufschlagt und damit die weitere Drehbewegung der Spannzange 2 verhindert. Das äußere freie Ende des Fingers 5a befindet sich dabei auf einem Kreis, dessen Durchmesser größer ist als der Durchmesser der ringförmigen Stirnfläche, auf der der Vorsprung 4a angeordnet ist. Beim Anschlagen an den Vorsprung 4a ist der federelastisch ausgebildete Finger 5a elastisch bis an die Innenwand des hülsenartigen Fortsatzes 3a auslenkbar.

Die Spannzange 2 weist an ihrem Spannbereich mehrere sich radial nach außen erweiternde Klemmfinger 9 auf, die beim Verspannen mit einem länglichen Körper durch die Spannmutter 3 durch das Anschlagen an den Lochungsrand bei der Befestigung der Anschlussarmatur an einem Durchbruch oder einer Lochung einer Gehäusewand oder an das untere Ende des Innengewindes der Spannmutter 3 nach innen gebogen werden und damit den länglichen Körper festlegen. Beim Verspannen mit dem länglichen Körper zieht sich die Spannzange 2 durch das Einschrauben in das Gewinde der Spannmutter 3 teilweise in die Gewindeöffnung zurück. Eine Dichtung 8, durch die der längliche Körper geführt wird, verschließt die Spannmutter 3 am oberen Ende.

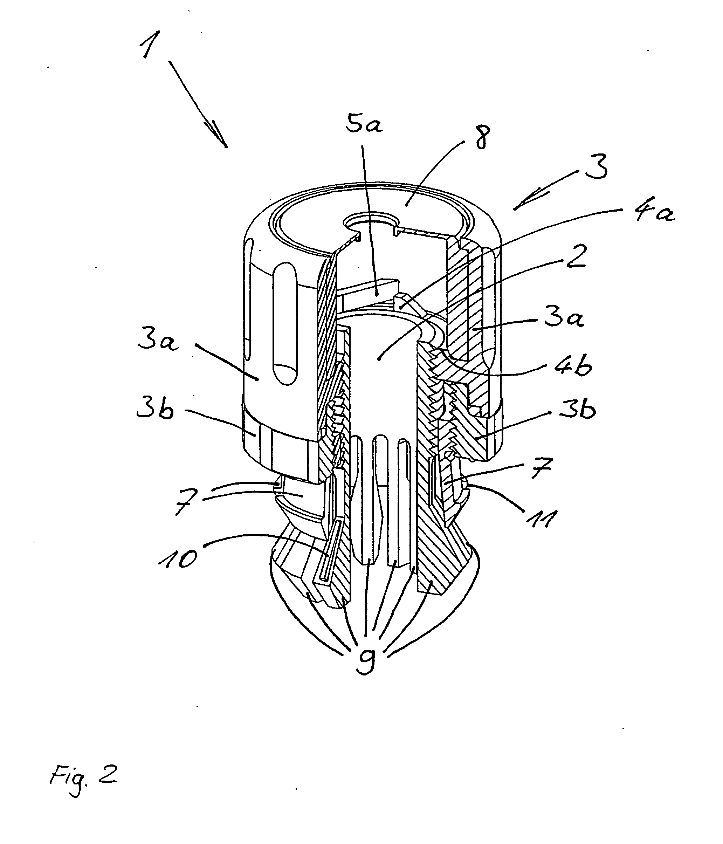

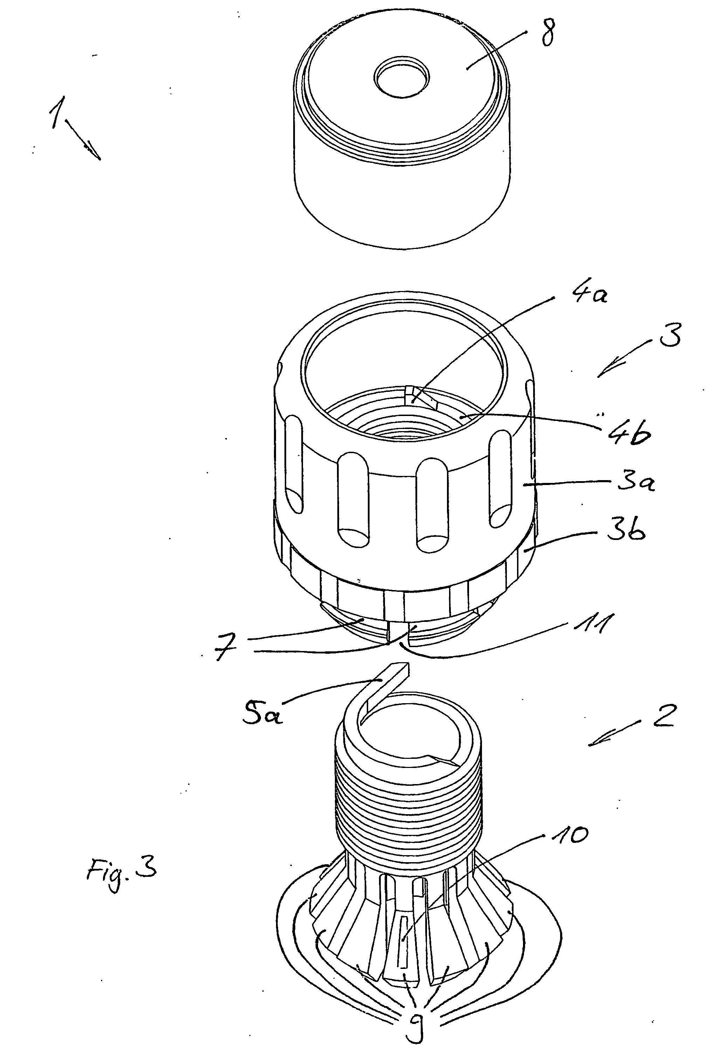

In der in Fig. 2 und 3 gezeigten zur Fig. 1 abgewandelten Ausführungsform weist die erfindungsgemäße Anschlussarmatur 1 eine Spannmutter 3 auf, wobei diese Spannmutter 3 aus einem hülsenartigem Fortsatz 3a und einem Schraubring 3b besteht. Der hülsenartige Fortsatz 3a weist ein Innengewinde auf, in das das Außengewinde der Spannzange 2 eingreift.

Ähnlich Fig. 1 weist die Spannzange 2 am oberen Ende einen als Gegenanschlag dienenden tangential überstehenden Finger 5a auf, der entgegen der relativen Drehrichtung des Außengewindes der Spannzange 2 von dieser absteht und der in Lösestellung der Spannzange 2 den Vorsprung 4a sowie die das Ende des Innengewindes 4b bildende ringförmige Stirnfläche der Spannmutter 3 in axialer Richtung auf der dem Gehäuse abgewandten Seite beaufschlagt und damit die weitere Drehbewegung der Spannzange 2 verhindert.

Zur Anpassung an verschiedene Wanddicken ist ein mit Schlitzen 11 versehener, die Lochung innenseitig mit Haltevorsprüngen 7a hintergreifender Stutzen 7 von unten in ein Innengewinde des Schraubringes 3b eingeschraubt, der in Gebrauchsstellung an der Außenseite der Spannzange 2 zwischen dieser und dem Lochungsrand angeordnet ist. Die Innenseite des Stutzens 7 wird von der Außenseite der Klemmfinger 9 der Spannzange 2 beaufschlagt. Mindestens einer der Klemmfinger 9 ist mit einem an der Außenseite angeordneten Mitnehmersteg 10 versehen, der in Gebrauchsstellung in die Schlitze 11 des Stutzens 7 eingreift.

Die Montage der in Fig. 3 erkennbaren Spannzange 2, Spannmutter 3 und Dichtung 8 erfolgt entsprechend der zeichnerischen Darstellung von unten nach oben, wobei der federelastische Finger 5a der Spannzange 2 so weit nach innen gebogen wird, dass er durch das Innengewinde der Spannmutter 3 passt. Nach dem Einschrauben der Spannzange 2 in die Spannmutter 3 biegt sich der Finger 5a wieder selbstständig nach außen und kann dadurch wieder als Gegenanschlag der Spannzange 2 dienen.

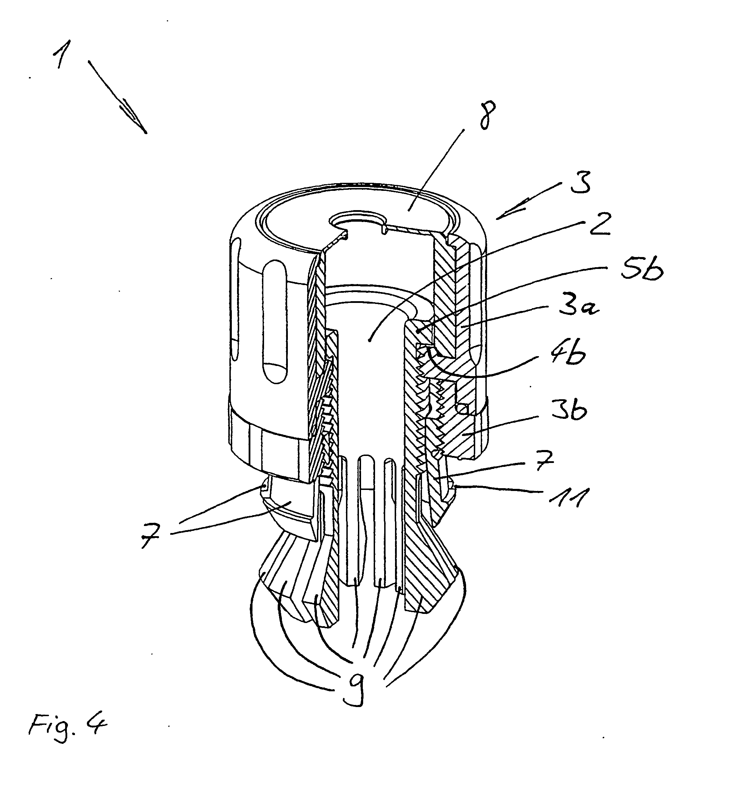

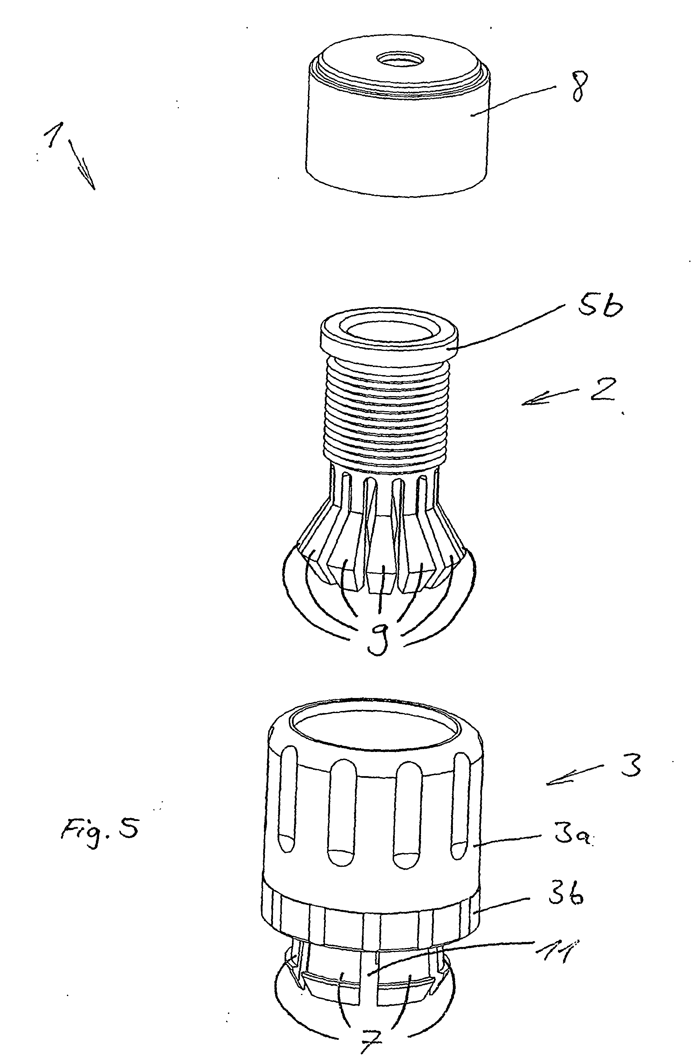

Fig. 4 und 5 zeigen ein weiteres Ausführungsbeispiel der Anschlussarmatur 1 gemäß Fig. 2 und 3, bei dem als Anschlag im Inneren des hülsenartigen Fortsatzes 3a der Spannmutter 3 die ringförmige Stirnfläche des Endes des Innengewindes 4b der Spannmutter 3 vorgesehen ist. Den Gegenanschlag an der Spannzange 2 bildet ein am Ende des Außengewindes der Spannzange 2 angebrachtes, umlaufendes und den Anschlag 4b axial übergreifendes Ringstück 5b, der in Lösestellung der Spannzange 2 den Anschlag 4b beaufschlagt. Die Montage der in Fig. 5 erkennbaren Spannzange 2, Spannmutter 3 und Dichtung 8 erfolgt entsprechend der zeichnerischen Darstellung von oben nach unten.

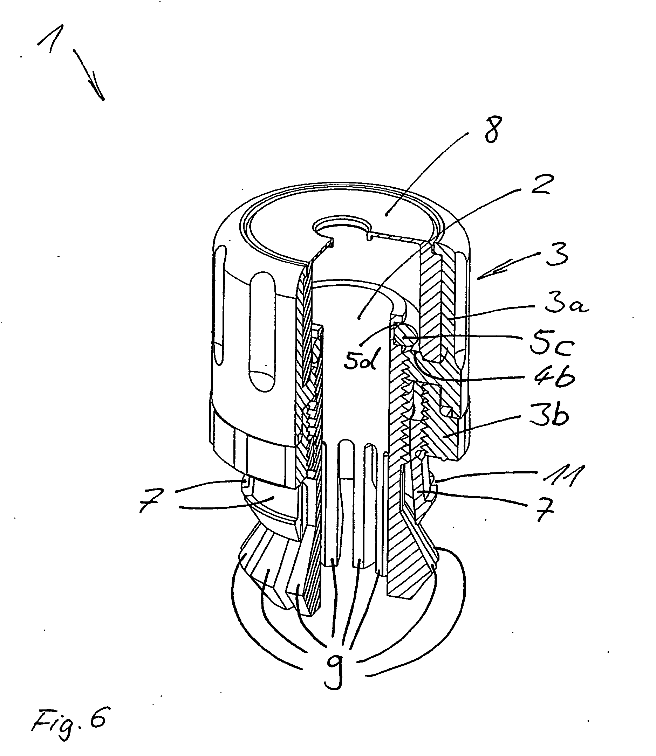

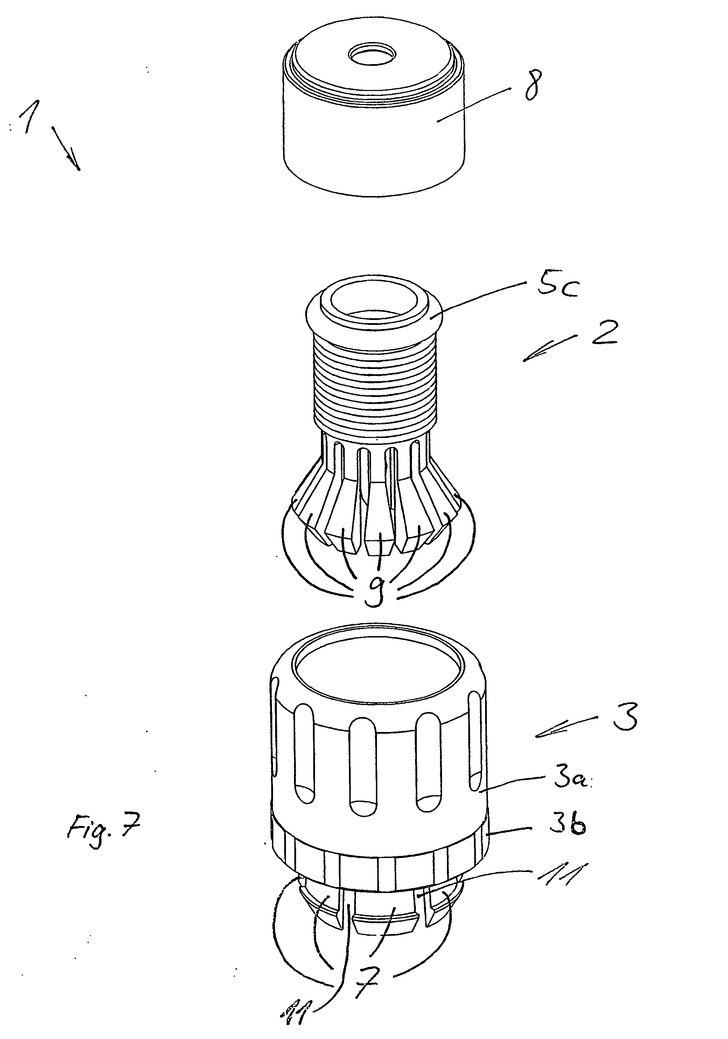

Die in Fig. 6 und 7 erkennbare Abwandlung des Ausführungsbeispiels aus Fig. 4 und 5 der Anschlussarmatur 1 weist als Anschlag im Inneren des hülsenartigen Fortsatzes 3a der Spannmutter 3 die ringförmige Stirnfläche des Endes des Innengewindes 4b der Spannmutter 3 auf. Den Gegenanschlag an der Spannzange 2 bildet ein in eine Nut 5d eingesetzter Ring, in diesem Ausführungsbeispiel ein O-Ring 5c, der in Lösestellung der Spannzange 2 den Anschlag 4b beaufschlagt. Der O-Ring 5c erzielt in Gebrauchsstellung durch das Anliegen an dem eine ringförmige Stirnfläche bildende Ende des Innengewindes der Spannmutter 3 eine Dichtwirkung und erfüllt damit eine Doppelfunktion einerseits als Gegenanschlag der Spannzange 2, andererseits als Dichtung zwischen Spannzange 2 und Spannmutter 3.

Die Montage der in Fig. 7 erkennbaren Spannzange 2, Spannmutter 3 und Dichtung 8 erfolgt entsprechend der zeichnerischen Darstellung von oben nach unten.

## Patentansprüche

1. Anschlussarmatur (1) zum Befestigen eines länglichen Körpers, beispielsweise eines Kabels, eines Schlauches, eines Rohres, eines Wellschlauches oder dergleichen, an einer Öffnung, insbesondere an einem Durchbruch oder an einer Lochung in einer Gehäusewand, wobei die Anschlussarmatur (1) eine in Gebrauchsstellung die Öffnung durchsetzende, mit im wesentlichen in axialer Richtung verlaufenden Schlitzen versehene Spannzange (2) aufweist, die an einem vor der Öffnung angeordneten und verbleibenden Abschnitt ein Gewinde aufweist und sich in Einsteckrichtung hinter der Öffnung in einen die Schlitze aufweisenden Klemmbereich radial nach außen erweitert und mittels des Gewindes und einer dazu passenden Spannmutter (3) auf der Außenseite beziehungsweise vor der Gehäuseöffnung anziehbar ist, sodass der Klemmbereich direkt oder indirekt zumindest teilweise in die Öffnung zurückziehbar und **dadurch** gegen den länglichen Körper verspannbar ist, **dadurch gekennzeichnet, dass** die Spannmutter (3) einen in axialer Richtung wirksamen Anschlag (4a, 4b) und die Spannzange (2) benachbart zu ihrem Gewindeabschnitt einen Gegenanschlag (5a, 5b, 5c, 5d) aufweist und dass der Gegenanschlag (5a, 5b, 5c, 5d) den Anschlag (4a, 4b) in Lösestellung der Spannzange (2) beaufschlagt.

2. Anschlussarmatur nach Anspruch 1, **dadurch gekennzeichnet, dass** die Spannzange (2) mit dem den Gegenanschlag (5a, 5b, 5c, 5d) tragenden Bereich den Anschlag (4a, 4b) der Spannmutter (3) in axialer Richtung auf der dem Gehäuse abgewandten Seite übergreift.

3. Anschlussarmatur nach Anspruch 1 oder 2, **dadurch gekennzeichnet, dass** die Spannmutter (3) ihrem Gewinde in axialer Richtung benachbart einen hülsenartigen Fortsatz (3a) aufweist, innerhalb welchem der radial nach innen vorstehende Anschlag (4a, 4b) angeordnet ist.

4. Anschlussarmatur nach einem der Ansprüche 1 bis 3, **dadurch gekennzeichnet, dass** der Anschlag (4a, 4b) am Ende des Innengewindes der Spannmutter (3) zwischen dem Gewindebereich und dem hülsenartigen Fortsatz (3a) angeordnet ist.

5. Anschlussarmatur nach einem der Ansprüche 1 bis 4, **dadurch gekennzeichnet, dass** die axiale Abmessung des hülsenartigen Fortsatzes (3a) wenigstens so groß wie der axiale Verstellweg beim Spannen der Spannzange (2) oder größer ist und dass der an der Spannzange (2) befindliche Gegenanschlag (5a, 5b, 5c, 5d) auch bei angezogener Spannschraube (2) oder Spannmutter (3) innerhalb des hülsenartigen Fortsatzes (3a) angeordnet ist.

6. Anschlussarmatur nach einem der Ansprüche 1 bis 5, **dadurch gekennzeichnet, dass** der Gegenanschlag an dem dem Spannbereich abgewandten Ende der Spannzange (2) angeordnet und ein mit dieser verbundenes, den Anschlag (4b) der Spannmutter (3) in Gebrauchsstellung axial übergreifendes Ringstück (5b) ist, welches über wenigstens einen Teil des Umfangs der Spannzange (2) und des Anschlags (4b) verläuft.

7. Anschlussarmatur nach Anspruch 6, **dadurch gekennzeichnet, dass** der als Ringstück (5b) ausgebildete Gegenanschlag einstückig mit der Spannzange (2) verbunden oder ein in eine Nut (5d) am Ende der Spannzange (2) eingesetztes separates Teil, insbesondere ein Dichtring oder O-Ring, ist.

8. Anschlussarmatur nach einem der Ansprüche 1 bis 5, **dadurch gekennzeichnet, dass** der Gegenanschlag an der Spannzange (2) wenigstens ein deren Außenumfang radial überragender, insbesondere tangential überstehender Finger (5a) ist und dass an dem davon in Gebrauchsstellung übergriffenen Anschlag (4b) der Spannmutter (3) ein sich in axialer Richtung erstreckender Vorsprung (4a) vorgesehen ist, an welchem der Finger (5a) in Umfangsrichtung zum Sperren der Drehbewegung anschlägt.

9. Anschlussarmatur nach Anspruch 8, **dadurch gekennzeichnet, dass** der als Finger (5a) ausgebildete Gegenanschlag federelastisch ausgebildet und beim Anschlagen an den Anschlagvorsprung (4a) elastisch bis an die Innenwand des hülsenartigen Fortsatzes (3a) auslenkbar ist.

10. Anschlussarmatur nach einem der Ansprüche 8 oder 9, **dadurch gekennzeichnet, dass** der als Gegenanschlag dienende, schräg oder tangential verlaufende Finger (5a) entgegen der relativen Drehrichtung des Außengewindes der Spannzange (2) von dieser absteht.

11. Anschlussarmatur nach einem der Ansprüche 8 bis 10, **dadurch gekennzeichnet, dass** der in axialer Richtung gegenüber dem Anschlag abstehende Vorsprung (4a) auf einem Durchmesser angeordnet ist, der kleiner als der Durchmesser desjenigen Kreises ist, auf welchem sich das äußere freie Ende des Anschlagfingers (5a) befindet.

12. Anschlussarmatur nach einem der Ansprüche 8 bis 11, **dadurch gekennzeichnet, dass** die Anschlagseite des Vorsprunges (4a) steil, insbesondere etwa axial verläuft und dass die der Anschlagseite abgewandte Begrenzung des Vorsprungs (4a) schräg ansteigend ist.

13. Anschlussarmatur nach einem der Ansprüche 1 bis 12, **dadurch gekennzeichnet, dass** zwischen der Spannzange (2) und dem Lochungsrand ein mittels Spannzange (2) aufweitbarer, ebenfalls geschlitzter, die Lochung innenseitig mit Haltevorsprüngen (7a) hintergreifender Stutzen (7) angeordnet ist, dessen Innenseite von der Außenseite der Spannzange (2) beaufschlagbar ist.

14. Anschlussarmatur nach einem der Ansprüche 1 bis 13, **dadurch gekennzeichnet, dass** der die Lochung innenseitig mit Haltevorsprüngen (7a) hintergreifende Stutzen (7) zur Anpassung an verschiedene Wanddicken mit der Spannmutter (3) mittels einer Schraubverbindung verbunden ist.

15. Anschlussarmatur nach einem der Ansprüche 1 bis 14, **dadurch gekennzeichnet, dass** die Öffnung des hülsenartigen Fortsatzes (3a) an der dem Gehäuse abgewandten Seite durch eine Dichtung (8) abgeschlossen ist, die einen Durchbruch für den länglichen Körper aufweist.

16. Anschlussarmatur nach einem der Ansprüche 1 bis 15, **dadurch gekennzeichnet, dass** mindestens einer der Klemmfinger (9) der Spannzange (2) einen an der Außenseite angebrachten Mitnehmersteg (10) aufweist, der durch Verzahnung mit den Schlitzen (11) des Stutzens (7) beim Spannen der Spannzange (2) ein Mitdrehen der Spannzange (2) mit der Spannmutter (3) verhindert.

## Claims

1. Connector fitting (1) for fixing a longitudinal body, for example a cable, a hose, a pipe, a corrugated hose or the like, to an opening, especially to an opening or a perforation in a housing wall, wherein the connector fitting (1) comprises a chuck (2) which penetrates the opening in the position of use and is provided with slits that extend essentially in the axial direction, said chuck comprising a thread located on a section which is arranged and remains in front of the opening, said chuck also expanding radially outwards in the direction of insertion behind the opening into a clamping region containing the slits, and can be tightened on the outer side or in front of the housing opening by means of the thread and a tensioning nut (3) fitted thereto, such that the clamping region can be directly or indirectly, at least partially withdrawn into the opening and thereby braced against the longitudinal body, **characterised in that** the tensioning nut (3) comprises an abutment (4a, 4b) which acts in the axial direction and the chuck (2) comprises a counter-abutment (5a, 5b, 5c, 5d) adjacent to its thread section, and **in that** the counter-abutment (5a, 5b, 5c, 5d) acts on the abutment (4a, 4b) in the release position of the chuck (2).

2. Connector fitting according to claim 1, **characterised in that** the chuck (2) with the area carrying the counter-abutment (5a, 5b, 5c, 5d) projects over the abutment (4a, 4b) of the tensioning nut (3) in the axial direction on the side remote from the housing.

3. Connector fitting according to claim 1 or 2, **characterised in that** the tensioning nut (3) has, adjacent to its thread in the axial direction, a sleeve like projection (3a) within which the radially inwardly projecting abutment (4a, 4b) is arranged.

4. Connector fitting according to one of claims 1 to 3, **characterised in that** the abutment (4a, 4b) at the end of the internal thread of the chuck (3) is arranged between the threaded region and the sleeve like projection (3a).

5. Connector fitting according to one of claims 1 to 4, **characterised in that** the axial dimension of the sleeve like projection (3a) is at least as great as the axial path of movement during the tensioning of the chuck (2) or greater and **in that** the counter-abutment (5a, 5b, 5c, 5d) provided on the chuck (2) is disposed within the sleeve like projection (3a) even when the tensioning screw (2) or tensioning nut (3) is tightened.

6. Connector fitting according to one of claims 1 to 5, **characterised in that** the counter-abutment is arranged on the end of the chuck (2) remote from the clamping region and is an annular member (5b) connected to said chuck and projecting axially over the abutment (4b) of the tensioning nut (3) in the position of use, said annular member (5b) extending over at least part of the circumference of the chuck (2) and abutment (4b).

7. Connector fitting according to claim 6, **characterised in that** the counter-abutment in the form of an annular member (5b) is integrally connected to the chuck (2) or is a separate part, particularly a sealing ring or O-Ring, inserted in a groove (5d) at the end of the chuck (2).

8. Connector fitting according to one of claims 1 to 5, **characterised in that** the counter-abutment on the chuck (2) is at least one finger (5a) projecting radially over the outer circumference thereof and more particularly projecting tangentially, and that on the abutment (4b) of the tensioning nut (3) over which said finger (5a) projects in the operating position, there is provided an axially extending projection (4a) on which the finger (5a) makes contact in the circumferential direction in order to block the rotary movement.

9. Connector fitting according to claim 8, **characterised in that** the counter-abutment in the form of a finger (5a) is of resilient elastic construction and on making contact with the abutment projection (4a) can be deflected resiliently as far as the inner wall of the sleeve like projection (3a).

10. Connector fitting according to one of claims 8 or 9, **characterised in that** the diagonally or tangentially extending finger (5a) serving as a counter-abutment stands away from the chuck (2) counter to the relative rotary movement of the outer thread of said chuck (2).

11. Connector fitting according to one of claims 8 to 10, **characterised in that** the projection (4a) projecting axially relative to the abutment is arranged on a diameter which is less than the diameter of the circle on which the outer free end of the abutment finger (5a) is located.

12. Connector fitting according to one of claims 8 to 11, **characterised in that** the abutment end of the projection (4a) extends steeply, particularly substantially axially, and **in that** the limit of the projection (4a) remote from the abutment end rises diagonally.

13. Connector fitting according to one of claims 1 to 12, **characterised in that** between the chuck (2) and the edge of the hole there is provided a connector (7) which can be expanded by means of the chuck (2), which is also slotted and engages behind the hole on the inside with retaining projections (7a), the inside of the connector being adapted to be acted upon by the outside of the chuck (2).

14. Connector fitting according to one of claims 1 to 13, **characterised in that** the connector (7) which engages behind the hole on the inside with retaining projection (7a) is connected to the tensioning nut (3) by means of a screw connection in order to adapt to different wall thicknesses.

15. Connector fitting according to one of claims 1 to 14, **characterised in that** the opening in the sleeve like projection (3a) on the side remote from the housing is sealed off by a seal (8) which has an opening for the longitudinal body.

16. Connector fitting according to one of claims 1 to 15, **characterised in that** at least one of the clamping fingers (9) of the chuck (2) has a follower strip (10) mounted on the outside, which prevents the chuck (2) from rotating with the tensioning nut (3) by meshing with the slots (11) in the connector (7) when the chuck (2) is tightened.

## Revendications

1. Garniture de raccordement (1) pour fixer un corps allongé, par exemple un câble, un tuyau souple, un tuyau rigide, un tuyau ondulé flexible ou analogues, à une ouverture, notamment à un passage ou à une perforation ménagé(e) dans la paroi d'un boîtier, la garniture de raccordement (1) présentant une pince de serrage (2) traversant l'ouverture en position d'utilisation et dotée de fentes s'étendant essentiellement dans la direction axiale, qui présente un filetage sur un segment disposé devant l'ouverture et y restant, et qui s'élargit radialement vers l'extérieur à l'arrière de l'ouverture par rapport au sens d'insertion pour former une zone de serrage présentant les fentes, et peut être immobilisée par serrage sur la face extérieure ou devant l'ouverture dans le boîtier au moyen du filetage et d'un écrou de serrage (3) correspondant, si bien que la zone de serrage peut se rétracter directement ou indirectement au moins en partie dans l'ouverture, enserrant de ce fait le corps allongé,
**caractérisée en ce que** l'écrou de serrage (3) présente une butée (4a, 4b) agissant dans la direction axiale et la pince de serrage (2) une contre-butée (5a, 5b, 5c, 5d) à proximité de son segment fileté, et **en ce que** la contre-butée (5a, 5b, 5c, 5d) sollicite la butée (4a, 4b) lorsque la pince de serrage (2) est en position de desserrage:

2. Garniture de raccordement selon la revendication 1, **caractérisée en ce que**, sur le côté situé à l'opposé du boîtier, la pince de serrage (2) recouvre la butée (4a, 42b) de l'écrou de serrage (3) dans la direction axiale avec la zone portant la contre-butée (5a, 5b, 5c, 5d).

3. Garniture de raccordement selon la revendication 1 ou 2, **caractérisée en ce que** l'écrou de serrage (3) présente dans la direction axiale, à proximité de son filetage, un prolongement semblable à une douille (3a) à l'intérieur duquel est disposée la butée (4a, 4b) faisant saillie radialement vers l'intérieur.

4. Garniture de raccordement selon l'une des revendications 1 à 3, **caractérisée en ce que** la butée (4, 4b) est disposée à l'extrémité du taraudage de l'écrou de serrage (3), entre la zone filetée et le prolongement semblable à une douille (3a).

5. Garniture de raccordement selon l'une des revendications 1 à 4, **caractérisée en ce que** la dimension axiale du prolongement semblable à une douille (3a) est au moins égale ou supérieure à la course axiale lors du serrage de la pince de serrage (2), et **en ce que** la contre-butée (5a, 5b, 5c, 5d) située sur la pince de serrage (2) se trouve à l'intérieur du prolongement semblable à une douille (3a) même lorsque la vis de serrage (2) ou l'écrou de serrage (3) est serré(e).

6. Garniture de raccordement selon l'une des revendications 1 à 5, **caractérisée en ce que** la contre-butée est disposée à l'extrémité de la pince de serrage (2) qui est opposée à la zone de serrage et est une pièce annulaire (5b) reliée à ladite pince de serrage et recouvrant axialement la butée (4b) de l'écrou de serrage (3) en position d'utilisation, qui s'étend au moins sur une partie du pourtour de la pince de serrage (2) et de la butée (4b).

7. Garniture de raccordement selon la revendication 6, **caractérisée en ce que** la contre-butée réalisée en tant que pièce annulaire (5b) est reliée à la pince de serrage (2) pour former un élément d'un seul tenant ou est une pièce distincte insérée dans une rainure (5d) à l'extrémité de la pince de serrage (2), notamment une bague d'étanchéité ou un joint torique.

8. Garniture de raccordement selon l'une des revendications 1 à 5, **caractérisée en ce que** la contre-butée sur la pince de serrage (2) est au moins un doigt (5a) dépassant radialement, notamment tangentiellement, du pourtour extérieur de cette dernière, et **en ce que** sur la butée (4b) de l'écrou de serrage (3) par-dessus laquelle ledit doigt est enclenché en position d'utilisation est prévue une saillie (4a) s'étendant axialement, contre laquelle le doigt (5a) vient en butée dans la direction du pourtour afin de bloquer le mouvement de rotation.

9. Garniture de raccordement selon la revendication 8, **caractérisée en ce que** la contre-butée réalisée en tant que doigt (5a) est réalisée déformable et, lorsqu'elle vient en butée contre la saillie de butée (4a), elle peut être déviée élastiquement jusqu'à la paroi interne du prolongement (3a) semblable à une douille.

10. Garniture de raccordement selon l'une des revendications 8 ou 9,
**caractérisée en ce que** le doigt (5a) s'étendant en biais ou tangentiellement, qui fait office de contre-butée, fait saillie de la pince de serrage (2) dans le sens inverse au sens de rotation relatif du filetage de cette dernière.

11. Garniture de raccordement selon l'une des revendications 8 à 10,
**caractérisée en ce que** la saillie (4a) faisant saillie axialement en face de la butée est placée sur un diamètre qui est inférieur au diamètre du cercle sur lequel se trouve l'extrémité libre extérieure du doigt de butée (5a).

12. Garniture de raccordement selon l'une des revendications 8 à 11,
**caractérisée en ce que** le côté de butée de la saillie (4a) s'étend de façon abrupte, notamment dans la direction axiale, et **en ce que** la limite de la saillie (4a) qui est située à l'opposé du côté de butée est oblique vers le haut.

13. Garniture de raccordement selon l'une des revendications 1 à 12,
**caractérisée en ce qu'**entre la pince de serrage (2) et le bord de la perforation se trouve un manchon (7) également fendu et pouvant être élargi par la pince de serrage (2), qui se retient à l'intérieur, derrière la perforation, à l'aide de griffes de retenue (7a) et dont la face intérieure peut être sollicitée par la face extérieure de la pince de serrage (2).

14. Garniture de raccordement selon l'une des revendications 1 à 13,
**caractérisée en ce que** le manchon (7) se retenant à l'intérieur, derrière la perforation, à l'aide de griffes de retenue (7a) est assemblé par vissage avec l'écrou de serrage (3) pour adapter la garniture de raccordement à différentes épaisseurs de paroi.

15. Garniture de raccordement selon l'une des revendications 1 à 14,
**caractérisée en ce que** l'ouverture du prolongement semblable à une douille (3a) est fermée sur le côté opposé au boîtier par une garniture d'étanchéité (8) qui présente un passage pour le corps allongé.

16. Garniture de raccordement selon l'une des revendications 1 à 15,
**caractérisée en ce qu'**au moins l'un des doigts de serrage (9) de la pince de serrage (2) présente une nervure d'entraînement (10) fixée sur le côté extérieur, qui, en se mettant en prise avec les fentes (11) du manchon (7) lors du serrage de la pince de serrage (2), empêche ladite de pince de serrage (2) de suivre la rotation de l'écrou de serrage (3).
